Europäisches Patentamt

**European Patent Office**

**Office européen des brevets**

(11) Publication number: **0 103 263**
A2

(12) # EUROPEAN PATENT APPLICATION

(21) Application number: **83108789.5**

(22) Date of filing: **06.09.83**

(51) Int. Cl.³: **A 01 K 15/02,** A 61 H 9/00,
A 63 B 23/06

(30) Priority: **13.09.82 US 416985**

(43) Date of publication of application: **21.03.84**
Bulletin 84/12

(84) Designated Contracting States: **BE DE FR IT**

(71) Applicant: **Hansen, David L., R.R. nr. 2, Box 226, Maple Park Illinois 60151 (US)**

(72) Inventor: **Hansen, David L., R.R. nr. 2, Box 226, Maple Park Illinois 60151 (US)**

(74) Representative: **Baillie, Iain Cameron et al, c/o Ladas & Parry Isartorplatz 5, D-8000 München 2 (DE)**

(54) **Therapeutic exercising device.**

(57) A therapeutic exercising device for hydraulic exercise and therapy treatment, comprising: open top housing means adapted to contain a body of liquid and having entry and exit means communicating with a pool section thereof adapted to be occupied by the user, a well portion in the bottom of said pool section disposed beneath the level of said entry and exit means, endless treadmill means mounted in said well portion and comprising roller supported endless belt means having an upper run presenting a movable undersupport surface over the bottom of said pool section and extending substantially horizontally between said entry and exit means, drive means exteriorly of said housing having driving connection with said treadmill means for actuating the same, control means for effecting selected operational movement speeds of said belt means, and plural hydrotherapy jet means communicating with said pool section for supplying a plurality of jet streams in said body of liquid, whereby the user occupant of the pool section is caused to ambulate in accordance with the speed of movement of said belt means and is subjected to hydrotherapy treatment by operation of said jet means.

0103263

- 1 -

## THERAPEUTIC EXERCISING DEVICE

This invention relates in general to a therapeutic exercising device, and more particularly to improved means for promoting the exercising, conditioning and therapeutic treatment of injured muscles and joints particularly in animals such as race horses, although its principles, teachings and concepts are equally applicable to humans.

The need to consistently and routinely exercise and condition the muscles and limbs of animals, such as race horses, for example, is well recognized. In general, the normal regimen for this purpose is carried out by running the animal over an exercise track to develop optimum muscle tone and strength, although this routine requires careful supervision and is limited because of the risk of injury to the animal's legs and hooves. The same applies to the currently popular jogging routine, carried on by a growing percentage of the world's human population. Such on-track exercising routines are further restricted because suitable track and exercising areas occupy considerable space, are expensive to construct, maintain and operate and are not always conveniently available.

As a consequence, considerable thought, time and effort have been directed toward the development of a suitable substitute for the exercise track.

With respect to race horses, these efforts have resulted in two basic approaches and solutions to the problem. One of the earlier substitutes for race track exercise was the use of a swimming pool or ocean surf in which the animal was exercised on the theory that the hydraulic resistance to the animal's movements promoted increased muscle development and tone. Swimming pools are expensive and are not normally available for animal use. Surf running is risky because of submerged rocks, pits and holes capable of severely injuring the animal's limbs and hooves. Development of an in-place swimming pool particularly for a horse is exemplified by the teachings of U. S. Patent 4,197,815, among others. While such swimming devices generally avoid the injury problems attendant exercise track or surf running, swimming per se has the disadvantage of actually weakening and under-developing the leg and ankle muscles of the animal, thus, detracting from its running ability.

Another effort which has gained some acceptance, principally because of conservation of space, is the dry land treadmill on which the animal may exercise with minimal area requirements. Such treadmills normally are capable of variable speeds whereby the animal, in keeping pace with the movement of the underfoot treadmill, is forcibly exercised at a desired intensity. These devices, however, generally suffer from the same drawbacks and disadvantages attendant track running in that they present a relatively hard underfoot surface and thus involve risk of leg and hoof unjury. Typifying this class of equipment is that set forth in U. S. Patent 3,952,704.

In recognition of the shortcomings of the two above outlined approaches, Scanlon, U. S. Patent 3,485,213 sought to combine the advantages of the dry land treadmill with the desirable muscle developing features of surf running. In essence this patent provides an underwater treadmill whereby an animal is forced to move at a desired rate to keep up with the treadmill's motion on which the animal is supported. Muscle development and endurance are promoted by resistance of the water in which the animal is partly immersed. Advantageously the risk of leg and hoof injury and the pounding impact characteristic to a dry land treadmill or practice track are generally avoided by this device since the water has a tendency to cushion hoof impact while exercising the leg, joints and muscles in contradistinction to that shortcoming of the swimming pool approach. One of the major disadvantages of the device, however, lies in its portability and the need to drain the water tank so that the animal may be removed. Further, the device fails to provide any therapeutic means for treating injured muscles or joints normally encountered in conditioning the animal.

In this latter regard corrective therapy devices for treating injured animals, particularly for sore muscles and swollen joints have been developed utilizing whirlpool therapy wherein the animal is immersed in a body of water and subjected to whirlpool jets directed at the injured muscle areas to accelerate recovery time. Typifying developments of this nature are U. S. Patents 4,183,329 and 4,291,646, for example. However, such whirlpool units, by themselves, provide little or no exercise to the animal and therefore do not satisfy muscle development and conditioning problems.

In recognition of the shortcomings and difficulties encountered with the above briefly described developments of the prior art, the present invention is directed to an improved combination which is distinguished by the advantages of underwater treadmill for muscle development plus features of the swimming pool or surf running thesis and the corrective thereauptic features of the whirlpool therapy devices. Thus, an animal or human employing a device according to this invention may experience the combined or selected individual advantages of swimming pool, whirlpool and treadmill therapy. At the same time the occupant of the device, particularly a race horse for example, avoids the disadvantages attendant dry land racetracks and treadmills, enjoys accelerated muscle tone development and may be selectively subjected to the corrective therapy attendant whirlpool jet treatment to promote the healing of tired or injured joints and muscles.

In        particular, the invention provides a therapeutic exercising device for hydraulic exercise and therapy treatment, comprising:  open top housing means adapted to contain a body of liquid and having entry and exit means communicating with a pool section thereof adapted to be occupied by the user, a well portion in the bottom of said pool section disposed beneath the level of said entry and exit means, endless treadmill means mounted in said well portion and comprising roller supported endless belt means having an upper run presenting a movable undersupport surface over the bottom of said pool section and extending substantially horizontally between said entry and exit means, drive means exteriorly of said housing having driving connection with said treadmill means for actuating the same, control means for effecting selected operational movement speeds of said belt means, and plural hydrotherapy jet means communicating with said pool section for supplying a plurality of jet streams in said body of liquid, whereby the user occupant of the pool section is caused to ambulate in accordance with the speed of movement of said belt means and is subjected to hydrotherapy treatment by operation of said jet means.

In the accompanying drawings:

Figure 1 is a perspective view with portions broken away illustrative of a horse training and exercising device;

Fig. 2 is a longitudinal cross-sectional view of the training tank and the in-ground support means therefor;

Fig. 3 is an enlarged perspective view of the underwater treadmill incorporated in the apparatus of Fig. 1;

Fig. 4 is an enlarged partial elevation of an adjustable mounting means for the treadmill seen in Fig. 1;

- 5 -                                    0103263

Fig. 5 is a schematic diagram of the operating systems incorporated in the device of Fig. 1; and

Fig. 6 is a schematic circuit diagram of the control means involved in regulating the water supply, treadmill and whirlpool jets incorporated in the apparatus of Fig. 1.

Turning now to the features of the preferred embodiment of this invention illustrated in the accompanying drawings, it will be recognized that the same is directed to an improved exercising and training apparatus particularly adapted for race horses and like animals, although, as previously mentioned, the principles, concepts and underlying features of the training device shown for purposes of demonstrating the present invention are equally applicable to human participants.

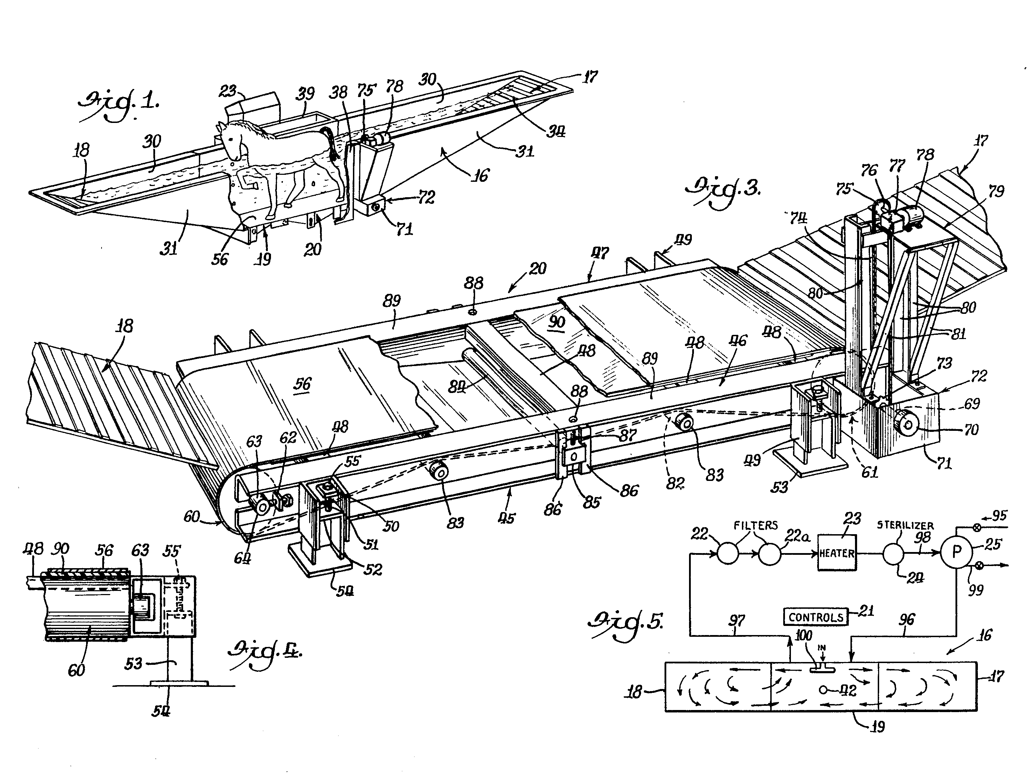

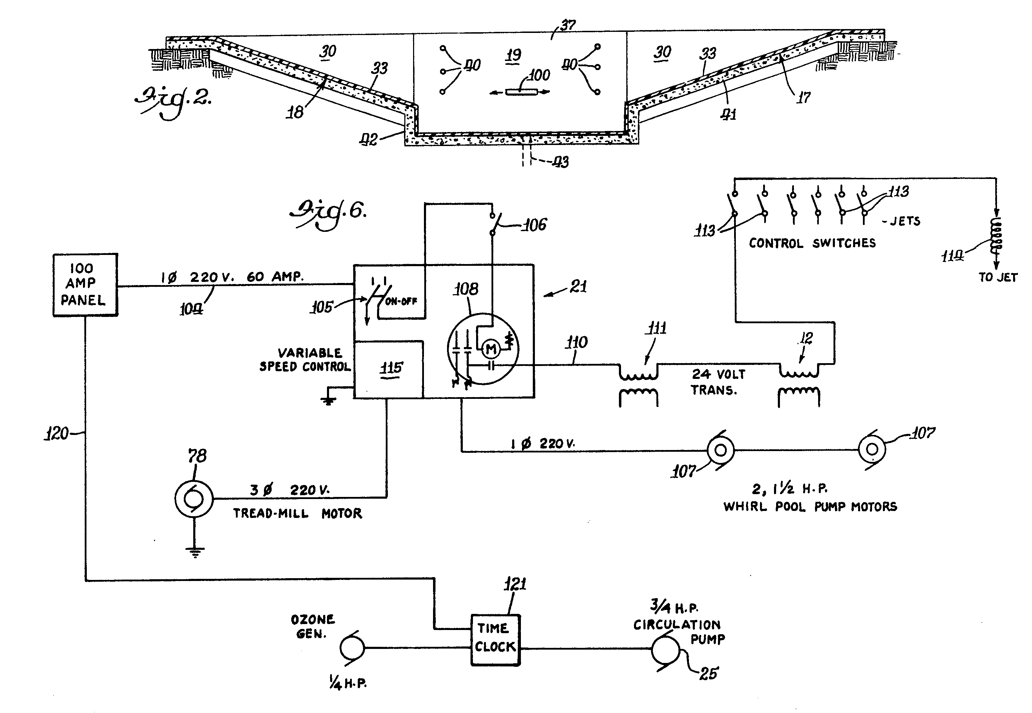

With initial reference to Figs. 1 and 2 of the drawings, it will be appreciated that the training device, indicated generally by numeral 15, comprises an elongated tank or housing 16 having inclined entry and exit ramp sections 17 and 18 respectively, and a central pool section 19 in which the animal is positioned for exercise and therapy and in the bottom of which is located a submerged treadmill 20 to be described in greater detail presently. As shown best in Figs. 1 and 5, suitable control means 21 are provided for regulating operation of the device and more particularly, for controlling the circulation and treatment of a body of water by means of filters 22, 22a, heater means 23, sterilizing means 24 and circulating pump means 25.

As shown in Figs. 1 and 2, the housing 16 preferably is formed in three sections to comprise the inlet ramp section 17, the exit ramp section 18 and the central pool section 19, each of which constitute molded liner portions made of reinforced fiberglass or a similar construction. The two ramp sections 17 and 18 are generally identical in formation and comprise a generally wedge-shape cross-sectional configuration as shown best in Fig. 2. Each ramp section has a pair of parallel spaced upright side wall portions 30, 31 bordered by a continuous flange apron 32 along the upper edges thereof. A bottom wall 33 of each of the ramp sections 17 and 18 may be molded with a plurality of parallel spaced transverse raised clogs or treads 34 to provide a purchase or footing for the animal as it enters and exits the training device. In the alternative, the clogs 34 may be eliminated, and the bottom wall 33 built in a planar incline with the clogs then being welded or otherwise attached over the upper face of the bottom wall 33 and comprising wooden members to guard the feet of the animal and to provide a replaceable stepping means to assist the animal in its movement into and out of the central section 19.

The central or pool section 19 of the housing 16, in contrast to the wedge-shape formation of the two ramp sections 17 and 18 is formed as a substantially open top rectangular box, the opposite ends of which are open and flanged for connection directly with the two ramp sections in assembly.

The central section also includes a pair of opposing side walls 37, 37. At least one wall 37 is further formed with a laterally projecting vertical elongated housing 38 which accommodates drive means for the treadmill as will be explained more fully hereinafter. The housing portion 35 is cast integrally with the one side wall 37 depending on which side of the housing the treadmill drive is located. In the particular embodiment illustrated herein, the housing portion 35 openly communicates with the interior of the pool section 18 although the same may be enclosed except for passage of a drive shaft for the treadmill as will appear presently.

At least one, and in certain cases, two equipment well portions 39 are also located outboard of and formed integrally with the walls 37, 37 for housing circulating water pumps and plumbing associated with the whirlpool jets which have plural outlets 40, 40 that discharge into the interior of the central section 19. Although in the illustrated case there are six whirlpool jet outlets 40, 40 shown in only one side wall 37, it is to be understood that both of the opposing side walls 37, 37 have such outlet jets 40, 40. It is to be noted that in the particular illustrated case there are whirlpool jet outlets 40 disposed to circulate jet stream water against the animal's front and back leg sections and muscle areas in which the animal is more likely to receive injury, specifically in the areas of the suspensories, knees, hocks, shoulders and strifles with the outlets 40, 40 in one wall 37 being opposed by the corresponding outlets in the opposite wall to make a total of twelve hydrotherapy jet outlets for the central section 19.

In assembly, the flanged ends of the central section abut against opposing ends of the ramp sections 17 and 18 having mating flange construction (not specifically illustrated) to formulate a water tight joint therebetween employing appropriate compression seals and bolts to unify the overall structure of the housing assembly 16. While the struction shown is built in three separate sections as above noted, it is contemplated that the housing 16 may be a unitary structure without seams or joints. This would be preferred for certain smaller installation sizes. Be that as it may, in operation the molded reinforced plastic housing 16 is used as a liner for a poured concrete tank formed about the housing 16 in the manner illustrated in Fig. 5.

In practice, an appropriate opening is excavated to receive the liner housing 16 which is positioned in the hole and spaced from the walls thereof for the reception of a poured concrete vault or encasement 41 thereabout (see Fig. 2). In this manner, the concrete reinforcement for the liner housing 16 is unified into a single poured structure which may be metal reinforced if desired, to afford a rigid and unified structure capable of holding the housing 16 and the weight of the liquid placed therein. It will be noted especially from Fig. 2 that the central bottom area of the pool section 19 is depressed to provide a wall portion 42 provided with an appropriate drain 43 whereby the liquid contents of the assembled housing 16 may be removed when necessary. In a typical installation, the dimensions of housing 16 are roughtly thirty-six feet long, seven feet wide and five to six feet deep to permit a water capacity of roughtly twenty-one hundred gallons. These dimensions, size and capacity appear to be satisfactory for accommodating race horses and animals of like size.

Turning now to the features of the underwater treadmill 20, reference is made to Figs. 1 through 3 of the drawings. As mentioned briefly hereinabove, the treadmill assembly 20 is disposed in the bottom well portion 43 of the central or pool section and is permanently installed thereat for supporting the weight of the animal or occupant of the device to effectuate a regulated movement of the limbs as desired. More specifically as best shown in Fig. 2 of the drawings, assembly 20 comprises a main frame 45 made up of a pair of parallel spaced elongated metal side channel members 46, 47 which are rigidly cross connected by parallel spaced box frame members 48, 48; there being five such box frame members in the particular illustrated structure. Mounted outboard of the two side channel members 46, 47 and adjacent the four corners thereof are four short C-channel sections 49, 49 which are vertically disposed at right angles to the longitudinal axis of the side members 46 and 47 and rigidly affixed, as by welding, to the outside thereof. Each of the channel sections 49 is provided with an internal plate member 50 welded across the interior thereof and provided with a central threaded opening receptive of an adjustment bolt 51 having the lower end thereof pivotally attached to an upper end plate 52 of a smaller channel portion 53 having a ground engaging foot plate 54 connected across its lower end. With this arrangement, threading action of the bolt means 51 as by engaging the upper hexagonal head end 55 thereof with a suitable wrench, effectively moves the associated channel member 53 vertically within its channel member 49 to adjustably regulate the vertical positioning of the foot member 54 relative to the longitudinal axis of the side channels 46 or 47, as the case may be. With this arrangement, the four corners of the frame 45 may be independently elevated or depressed as required. This expedient is employed to train the treadmill belt member 56, as will be explained more fully hereinafter.

In addition to the five cross connecting box frame members 48 referred to, the two side frame members 46 and 47 are also traversed by an idler roller 60 at one end thereof and a drive roller 61 at the opposite end thereof: the two rollers constituting cylindrical metal rollers suitable for engaging and supporting the endless belt member 56. Adjustment means 62 engage bearing means 63 at the ends of support shaft 64 for the idler roller 60 whereby to move such support shaft along a slotted opening 65 formed in the major vertical web of the channel frame members 46 and 47. This assists in roughly tensioning and aligning the treadmill's endless belt 56 about the rollers 60, 61.

The drive roller 61, unlike idler roller 60, is not adjustable relative to the frame members 46 and 47; such being mounted in fixed position with one end of the support shaft or axle 69 therefor being supported in bearing means mounted in frame member 47 and at the opposite end thereof supported in bearing means 70 carried in an end wall 71 of a laterally extending generally U-shaped support cage 72 (see Fig. 3). The drive axle 69 also carries a toothed sprocket wheel 73 located within the open interior of the support cage 72 for engagement with an endless drive chain means 74 which extends upwardly therefrom and is trained about a second drive sprocket 75. A shaft 76 associated with a gear reducer 77 and a drive motor 78 therefor supports and rotatably drives sprocket 75 to activate chain 74. The motor and gear reducer are mounted on a hinged platform 79 carried at the upper end of a supporting framework comprising parallel spaced vertical uprights 80, 80 and angularly disposed frame members 81, 81 extending upwardly from the support cage 72.

With reference to Fig. 1 of the drawings, it will be understood that the frame members 81, 81, the support cage 72, drive chain, etc. related to the drive motor and gear reducer are disposed within the laterally projecting housing portion 38, heretofore described. The pivotal mounting of the platform 79 by virtue of a conventional adjustment screw means (not shown) permits regulation of the tension on the drive chain 74 in a known fashion.

In addition to the main drive roller and the idler roller 60 heretofore described, the treadmill belt support system in particular includes a pair of idler rollers 82, 82, having end support bearings 83, 83 stationarily mounted in the vertical web walls of the side support frames 46, 47 and located substantially one third the distance inwardly from the opposite ends thereof.

A central idler roller 84 is also provided which is retractably carried in movable bearing blocks 85 having sliding connection with a pair of vertically extending guide rails 86, 86 welded or otherwise rigidly affixed to the outside of the channel frame members 46 and 47, substantially medially of the length of such frame members. A suitable adjustment screw means 87 is associated with each block 85 and is available for engagement via an opening 88 formed in the upper flange 89 of each of the two frame members 46 and 47. Thus, the bearing support blocks 85 may be vertically positioned as selected along the rails 86 to adjust tension of the treadmill belt 56.

Mounted over and affixed to the several box channel support members 48, 48 and extending substantially the length of the side frame members 46 and 47 is a support platform member 90. This platform may be made of suitable synthetic material such as reinforced fiberglass, nylon or similar non-corrosive material in sheet form capable of undersupporting the weight of user of the training device, such as the race horse illustrated in Fig. 1.

The endless treadmill belt 56 is trained over the platform 90 about the two end rollers 60 and 61, above or over the upper side of the two idler rollers 82, 82 and beneath the central idler roller 84 as shown best in Fig. 2. Tensioning of the belt is regulated by the vertical positioning of the guide blocks 85, 85 associated with the central idler with additional adjustment being available via the adjustment means 62, associated with the main idler roller 60, as hereinabove mentioned. The entire treadmill assembly 20, as previously noted, is mounted in the bottom well of the tank section 19 of the housing assembly so that the upper run of the belt 56 is substantially level with the lower ends of the two ramp sections 17 and 18 in the manner shown in Fig. 2 of the drawings.

It will be appreciated that with the treadmill assembly 20 disposed in the bottom of the tank section and submerged beneath the body of water contained therein, adjustable regulation of the belt means to maintain its tension and train over the idler and drive rollers 60 and 61 is of paramount importance. Of course, these adjustments could be made by draining the tank and even removing the treadmill assembly, but such a procedure is not practical and does not accommodate the train of the belt to the environment of the tank in which it operates. As a consequence, individual adjustment of the adjustment means at the four corners of the treadmill framework comes into play. Specifically, by individually adjusting the elevation of the several movable channel members 53 by threading adjustment of the bolt means 51, the rectangular framework supporting the belt means 56 may be diagonally racked or twisted to effectuate a desired lateral train of the belt, or that is, train the same centrally of the two main rollers 60, 61 while the treadmill assembly remains submerged. This is of importance and critical to the successful operation of the training device, particularly with animals which ambulate or run in a manner tending to produce an unbalanced load condition on the treadmill. Due to the fact that the gait of a horse, in particular is such that the weight of the animal is imposed first on one side of the treadmill and then on the other, or that is, shifted laterally back and forth, there is marked tendency of the belt 56 to walk or move laterally as the same orbits about its supporting roller system. As a consequence, it is necessary to have a conveniently usable means, such as that described, whereby the train of the belt may be rapidly and accurately realigned as needed.

Belt tensioning, of course, is readily adjustable by using a reach rod engageable with the upper head ends of the adjustment bolts 88, associated with the movable idler roller 84. Thus, successful operation of the treadmill may be maintained.

With reference to Fig. 5 of the drawings, the general features of the water supply and circulating system associated with the tank housing 16 are set forth. As shown, water within the interior of the tank 16 is circulated by the pump means 25 having a valve controlled supply inlet 95 for supplying fresh water directly to the tank via inlet supply piping 96. Water in the tank 16 is subject to the suction side of the pump 25 via drain outlet 43 and line 97 which feeds a pair of filters 22, 22a for the purpose of removing particulates from the water along with other impurities. Water passing through the filters 22, 22a is fed to a heater unit 23 whereby the temperature of the water may be selectively controlled. Water discharged from heater 23 is circulated through the sterilizing equipment 24, such as an ozone sterilizer, for purification purposes and thence to the return side of the pump 25 via line 98. A valve controlled discharge line 99 permits overboard discharge of the water for draining the tank as necessary.

In addition to the water supply system thus described, the water in the tank 16 is also subject to the effects of the several therapeutic jets 40, 40 in the side walls of the central pool section 19 which provide directional streams of water mixed with air in a known manner. A centrally disposed distribution jet 100, formed as a T, is used for diverting jet streams toward the opposite ends of the tank 16. This effects an orbital water circulation in the tank as indicated by the arrows in Fig. 5. Although only one distribution jet 100 is illustrated in the particular insulation of Fig. 5, an additional such inlet jet is employed on the opposite wall of section 19. The incoming jet streams also assist in circulating the fluid in the tank 16 causing impurities such as straw particles, hair and the like to be discharged through the drain outlet 42 connected with the suction outlet line 97 of the circulating water system. It is of vital importance that the water not only circulate in and about the tank 16, but that it be maintained in a moving state throughout the tank for the sake of removing impurities and other ingredients through the filtering and sterilizing means 22 and 24, to avoid contamination. This becomes a particularly serious problem in periods of frequent use, particularly by a large number of animals.

Control of the liquid in the tank 16 as well as its circulation by the pump means 25 and the regulation of the therapeutic jet means 40, 40 is effected by the control means 21, schematically illustated in Fig. 6. As there illustrated, a typical control means 21 is supplied from a 100 amp, 220 volt, 60 amp single phase supply over conductor 104 which feeds a main "On-Off" control switch 105. A second control switch 106 is provided for controlling energization of a pair of whirlpool circulating motors 107, 107 over a motor starting relay circuit means 108. Auxiliary circuit 110 feeds off of the motor starter circuit 108 to supply a pair of 24 volt transformers 111, 112 for supplying one or more jet control switches 113; there being a control switch 113 for each of the jet outlets 40 in the illustrated case. The closing of each switch 113 serves to energize an associated solenoid means 114 for operating individual valves (not shown) controlling flow of liquid through an associated outlet jet 40. While the illustrated diagram of Fig. 6 shows six control switches 113 for the six jets 40 illustrated in Fig. 2, it is to be understood that both walls 37 of the tanks central pool section 19 have opposing jets 40 mounted therein for application to either or both sides of the animal as selected (see Fig. 1) and therefore twelve switches 113 and solenoid controlled valves are employed. While the individual switch control of the whirlpool jets is shown herein, such is not essential and all jets may be controlled by a single on-off switch on selected numbers thereof may be controlled by switch means as desired.

Control means 21 also includes a variable speed control unit 115 for regulating the speed of the treadmill motor 78 which motor is supplied over a three phase 220 volt supply conductor 116. Motor 78 is in the order of a three horse power, 220 volt gear motor, capable of starting up under the load of the animal standing on the treadmill as it is most difficult to have an animal walk onto a moving treadmill. Further by means of the variable speed control 115 the motor 78 may be regulated to produce a desired rate of movement for the treadmill, thus controlling the rate of exercise for the animal in the pool of water.

In addition to the control means 21, the 100 amp supply also feeds, via conductor 120, a timing clock 121 is provided in circuit with the circulating water pump 25, in the order of a three quarter horse power motor, as well as a one quarter horse power motor associated with the ozone generator or sterilizing means 24. By virtue of the timer, the circulation of water through the pool may be set for a desired time interval corresponding to the length of time that the animal is to be exercised in the improved training device hereinabove described.

Having thus set forth the various means employed in the training apparatus 15, its use and operation will now be described. In brief, when exercising a race horse or similar animal for example, the animal is lead down the ramp 17 onto the upper surface of the treadmill 56 which is undersupported by the platform means 90. In most cases, the animal is tethered in place by suitable bar means placed across the pool both in front and behind the animal or by simple halter tethers anchored to opposite sides of the pool section 19. The timer 121 is then set and the water circulation initiated along with energization of the treadmill motor bringing the treadmill from a standstill position to a desired speed of movement. Normally, the animal is initially exercised at a gradual walk which may be increased gradually to a desired speed causing the animal to keep up with the movement of the underlying support presented by the moving treadmill surface. Thus, the animal is forced to ambulate through the hydraulic pool and work against the water much as if he were swimming or running through the surf. By regulating the time and speed of movement of the animal, a desired level of exercise may be achieved. If perchance the animal is injured or has sore muscles, selected activation of the several hydrotherapy jets 40 is brought about, causing high speed water and air streams to move against the affected muscular area etc. Thermal level of the water temperature is regulated by the heater means 23. Sanitization and purification of the water is carried out by the two filter means 22, 22a and sanitizing means 24; the filter system preferably comprising a first vacuum filter 22 followed by a sand filter 22a with the sanitizing means preferably being an ionized oxygen bacterial treatment system capable of controlling bacteria level with the generation of ionized oxygen and the intermixture thereof with the circulating water. This normally eliminates the need for eye and skin irritating chemicals such as chlorine in the liquid bath.

Experience has shown that the utilization of apparatus in accordance with the invention as hereinabove described, is fully capable of training and exercising a race horse with little or no risk of injury to legs, hooves or ankles and that the therapeutic effect of the whirlpool jet system involved is highly effective and efficient in aleviating sore and injured muscle and joint areas.

The claims defining the invention are as follows:

1. A therapeutic exercising device for hydraulic exercise and therapy treatment, comprising: open top housing means adapted to contain a body of liquid and having entry and exit means communicating with a pool section thereof adapted to be occupied by the user, a well portion in the bottom of said pool section disposed beneath the level of said entry and exit means, endless treadmill means mounted in said well portion and comprising roller supported endless belt means having an upper run presenting a movable undersupport surface over the bottom of said pool section and extending substantially horizontally between said entry and exit means, drive means exteriorly of said housing having driving connection with said treadmill means for actuating the same, control means for effecting selected operational movement speeds of said belt means, and plural hydrotherapy jet means communicating with said pool section for supplying a plurality of jet streams in said body of liquid, whereby the user occupant of the pool section is caused to ambulate in accordance with the speed of movement of said belt means and is subjected to hydrotherapy treatment by operation of said jet means.

2. The device of claim 1, wherein said housing means comprises an elongated structure having side and bottom walls including downwardly inclined and coaxially aligned entry and exit ramps communicating with a central said pool section to formulate said entry and exit means; said housing means being constructed of reinforced plastic materials and adapted for inground installation, and poured concrete vault means surrounding and intimately embracing the underside and sidewalls of said housing to provide operational reinforcement of the same in its inground installed position.

3.    The device of claim 1, including plural adjustment means for regulating the train and tensioning of said belt means; said adjustment means being adjustably operable without removing said treadmill means from said body of liquid.

4.    The device of claim 2, wherein said ramps have transversely extending raised treads spaced along the bottom walls thereof.

5.    The device of claim 1, wherein said housing is formed in three separate sections, namely, an entry ramp section, an exit ramp section and a central pool section, and means interjoining said sections in sealed, abutting, end-to-end relation to form a unified liquid containing open top container.

6.    The device of claim 1, wherein said treadmill means comprises a substantially rectangular frame means, plural parallel roller means mounted transversely across said frame means including a drive roller across one end thereof, an end idler roller at the opposite end thereof and plural intermediate idler rollers located between said end roller and drive roller; endless belt means trained about said frame and said rollers, platform means mounted between the upper side of said frame means and an upper run of said belt means, and plural adjustment means supporting said frame means in said well portion; said adjustment means being individually operably to selectively elevate or depress portions of said frame means whereby to diagonally rack the same and thereby laterally train said belt means in its orbital path about said frame while the treadmill means is submerged in the liquid contained in said housing.

7.    The device of claim 6, including means for adjusting the vertical position of a centrally disposed idler roller whereby to effect selected tensioning of said belt means.

0103263

8. The device of claim 1, including pump means for circulating liquid to and from the interior of said housing means.

9. The device of claim 8, including heater means, filter means and sanitizing means coupled to said means for circulating liquid and operable to heat the liquid and remove particulates and impurities therefrom.

10. The device of claim 1, including additional control means for selectively controlling operation of said jet means whereby to impact selected areas of the user's body positioned in said pool section.

11. The device of claim 6, wherein said adjustment means comprise individual vertical frame members affixed to said frame means adjacent each corner thereof, ground engaging foot means located beneath said frame members, means mounting said foot means for vertical movement relative to said frame members, and means for adjustably moving said foot means to vary the elevation of the frame means adjacent thereto.

12. The device of claim 1, including at least one jet nozzle means provided in a sidewall of said pool section and formed with a T-shaped configuration capable of ejecting jet streams toward opposite ends of said pool section whereby to circulate liquid along the sidewalls thereof.

13. The device of claim 1, adapted for the hydrotherapeutic exercising, training and treatment of animals, such as racehorses, including planar platform means undersupporting the upper run of said belt means, frame means supporting said platform means, plural parallel roller means mounted on said frame means for operably supporting said belt means for orbital movement about said frame means and platform means, said drive means coupled to said roller means for driving said belt means whereby to present a movable undersupporting surface across the bottom of said pool section, said plural jet means comprising nozzles in opposing walls of said pool
section for supplying oppositely directed hydrotherapy
streams of air and water to the pool section, additional
control means for selectively activating said jet nozzle
means, pump means for supplying water to and from said
housing and circulating the same therein at a desired
level whereby an animal in said pool section may be
forcibly induced to ambulate at a desired exercising
rate in keeping with the movement of said belt means
and may be selectively subjected to hydrotherapy treat-
metn by operation of said jet nozzle means.

14.  A hydrotherapeutic conditioning device
adapted for use in a pool of water in which the user
exercises against the resistance of the water, comprising
an underwater treadmill having a frame means mounted
over the bottom of the pool, plural parallel spaced
roller means mounted on said frame means, platform
means extending over the upper side of said frame means,
endless belt means trained about said roller means,
frame means and said platform means for orbital movement thereabout; drive means for activating said
belt means including means for regulating the speed of
movement thereof, means for selectively positioning at
least one of said roller means to adjust the tension
of said belt means, and plural adjustable support means
attached to spaced location of said frame means and
engaging the bottom of the pool; said support means being
operable for individual adjustment whereby to adjustably
elevate selected portions of said frame means and
disgonally rack the same for purposes of training said
belt means; said means for selectively positioning at
least one of said roller means and said support means
being operable while said treadmill is submerged.

15.  A therapeutic exercising device substantially
as herein described with reference to the accompanying
drawings.

𝓕𝑖𝑔.1.

𝓕𝑖𝑔.3.

𝓕𝑖𝑔.4.

𝓕𝑖𝑔.5.

FILTERS

HEATER

STERILIZER

CONTROLS

1/2

010326 3

Fig.2.

Fig.6.

100 AMP PANEL

1Ø 220 V. 60 AMP.

ON-OFF

VARIABLE SPEED CONTROL

CONTROL SWITCHES — JETS

TO JET

24 VOLT TRANS.

1Ø 220 V.

2, 1½ H.P. WHIRL POOL PUMP MOTORS

3Ø 220 V.
TREAD-MILL MOTOR

OZONE GEN.
¼ H.P.

TIME CLOCK

¾ H.P. CIRCULATION PUMP